# EUROPEAN PATENT APPLICATION

(11) **EP 2 002 742 A1**
(43) Date of publication of application: **17.12.2008**
(21) Application number: 07252436.6
(22) Date of filing: 14.06.2007
(51) Int. Cl.: A43B 13/12, A43B 17/14, A43D 27/00, A43D 37/00, B29D 31/518, B29C 44/56

(54) **Method for making foamed sole pads**

(71) Applicant: Chi, Cheng-Hsian, Taichung City (TW)
(72) Inventor: Chi, Cheng-Hsian, Taichung City (TW)
(74) Representative: Midgley, Jonathan Lee

(57) **Abstract**

A method for making foamed sole pads (400) includes the steps of: a) providing a profiled foam blank (4) including at least one blank unit (4A) that has a substantially sole shape outline, and that has front and heel portions (43,44), a top profiled surface (41), and a bottom profiled surface (42) symmetrical to the top profiled surface (41) ; b) dividing the foam blank (4) along a cutting plane (A) between the top and bottom profiled surfaces (41,42) to provide at least two foam blank slices (40); c) bonding a fabric layer (7) to a surface of each of the foam blank slices (40) ; d) heating each of the foam blank slices (40); e) compression molding each of the foam blank slices (40) to form the sole pads (400); and f) trimming the sole pads (400).

## Description

The invention relates to a method for making sole pads, more particularly to a method for making foamed sole pads.

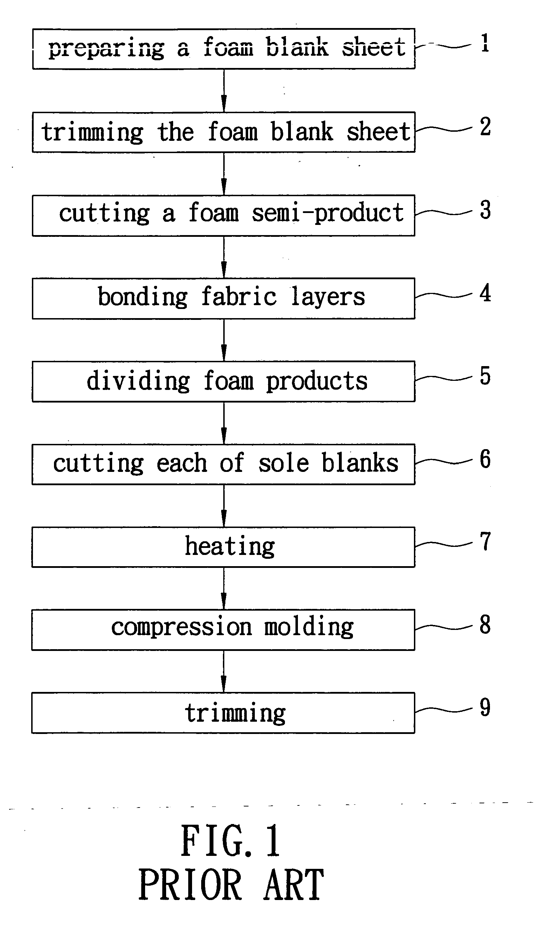

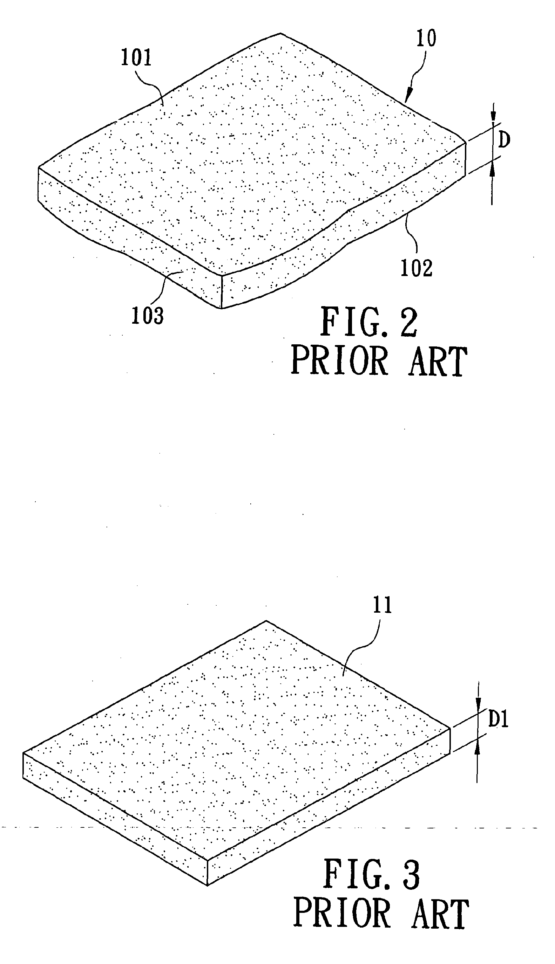

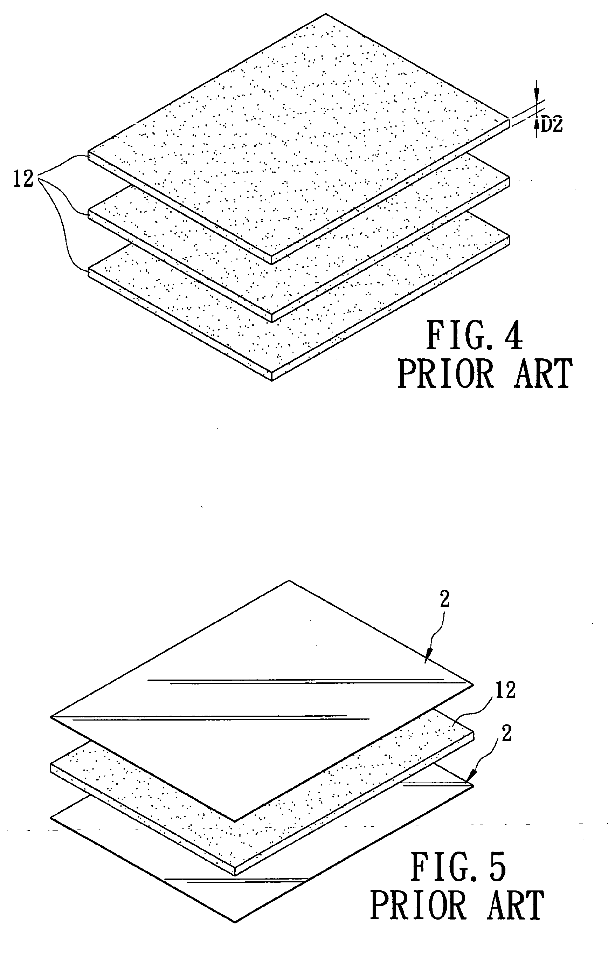

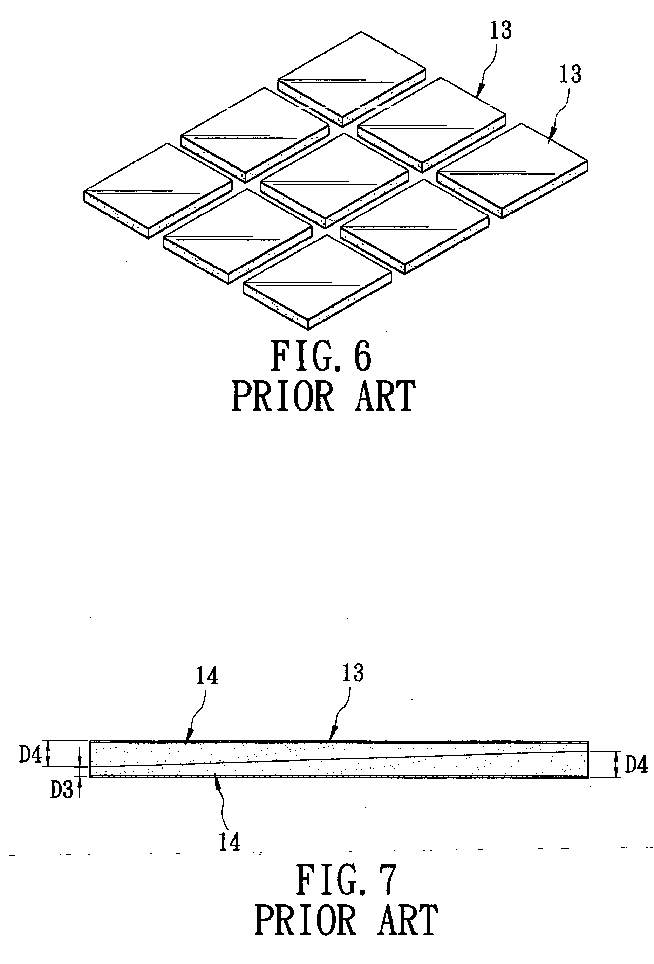

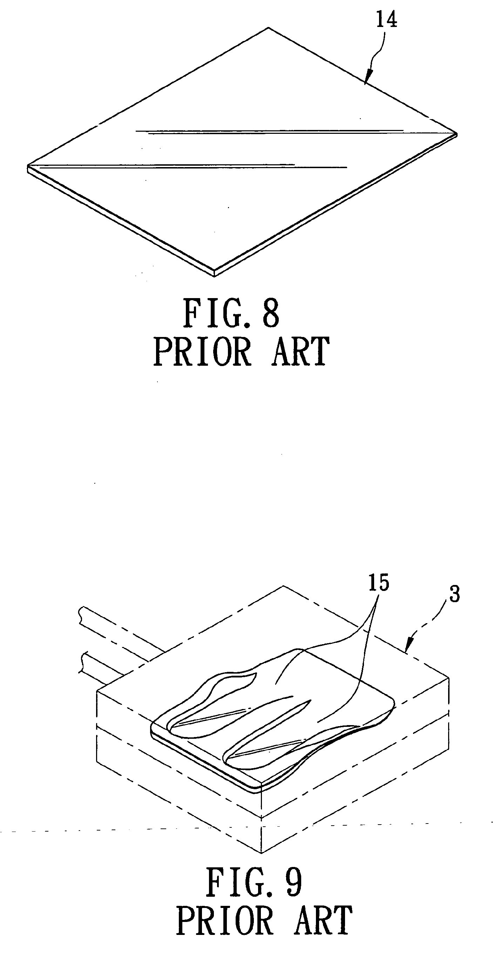

Referring to Figure 1, a conventional method for making foamed sole pads includes the following steps:
1) preparing a foam blank sheet:
   Referring to Figure 2, a foam blank sheet 10 is prepared, which is made of ethylene vinyl acetate copolymer. In the illustrative example, the foam blank sheet 10 has a thickness (D) of 47 mm.
2) trimming the foam blank sheet:
   Referring to Figures 2 and 3, the foam blank sheet 10 is trimmed at the top, bottom and peripheral portions 101, 102, 103 thereof to obtain a foam semi-product 11. In the illustrative example, the foam semi-product 11 has a thickness (D1) of 42 mm.
3) cutting the foam semi-product:
   Referring to Figures 3 and 4, the foam semi-product 11 is cut along cutting planes to provide a plurality of foam products 12 that have uniform thickness. In the illustrative example, three foam products 12 are formed, each of which has a thickness (D2) of 14 mm.
4) bonding fabric layers:
   Referring to Figure 5, two fabric layers 2 are bonded to the top and bottom surfaces of each of the foamproducts 12.
5) dividing the foam products:
   Referring to Figure 6, each of the foam products 12, which have been bonded with the fabric layers 2, is divided into a plurality of square sole blanks 13.
6) cutting each of the sole blanks:
   Referring to Figures 7 and 8, each of the sole blanks 13 is cut along a cutting plate inclined relative to the top and bottom surfaces of each of the sole blanks 13 to provide two identical sole blank slices 14, each having a first thickness (D3) and a second thickness (D4) opposite to and smaller than the first thickness (D3). In the illustrative example, the first thickness (D3) is 5 mm, and the second thickness (D4) is 9 mm.
7) heating:
   Each of the sole blank slices 14 is heated.
8) compression molding:
   Referring to Figures 8 and 9, each of the sole blank slices 14 after being softened by heating is compression molded in a mold 3 to obtain sole pads 15.
9) trimming:
   The sole pads 15 are trimmed and separated.
   Although the aforesaid conventional method can be used for making the foamed sole pads, it has the following disadvantages:
      1. The conventional method involves a plurality of processing steps which are relatively complicated and time-wasting. Furthermore, as shown in Figures 8 and 9, the sole pads 15 are made by molding the sole blank slice 14 having a square shape. Therefore, a relatively large amount of waste material is produced after trimming the sole pads 15.
      2. As shown in Figure 2, the foam blank sheet 10 should be trimmed at the top, bottom and peripheral portions 101, 102, 103 thereof to obtain the foam semi-product 11. Such a trimming step also results in the production of the waste material.
      3. As shown in Figure 7, each of the sole blank slices 14 is limited to a wedge profile. If the foamed sole pads to be made are required to have an increased thickness at a specific area thereof in view of a specific requirement, an additional foam material is needed, which in turn increases the processing procedure, time, and cost.
      4. If a reinforcing plate is intended to be embedded in the foamed sole pads, each of the sole blank slices 14 before being bonded with the fabric layer 2 should be formed into a sole blank (not shown), which is then embedded with the reinforcing plate, and subsequently bondedwiththefabriclayer2. Therefore, the complexity of the processing procedure of the conventional method is increased.

Therefore, the object of the present invention is to provide a method for making foamed sole pads, in which the processing procedure is relatively simple and the raw material used for the foamed sole pads is reduced.

The method for making foamed sole pads according to this invention includes the steps of: a) providing a profiled foam blank including at least one blank unit that has a substantially sole shape outline, and that has front and heel portions, a top profiled surface, and a bottom profiled surface symmetrical to the top profiled surface; b) dividing the foam blank along a cutting plane between the top and bottom profiled surfaces to provide at least two foam blank slices; c) bonding a fabric layer to a surface of each of the foam blank slices; d) heating each of the foam blank slices; e) compression molding the foam blank slices to form the sole pads; and f) trimming the sole pads.

Other features and advantages of the present invention will become apparent in the following detailed description of the preferred embodiment with reference to the accompanying drawings, of which:
Figure 1 is a flow diagram of a conventional method for making foamed sole pads;
Figures 2 to 9 are views showing consecutive steps of the conventional method;
Figure 10 is a flow diagram of the preferred embodiment of a method for making foamed sole pads according to this invention; and
Figures 11 to 19 are views showing consecutive steps of the preferred embodiment.

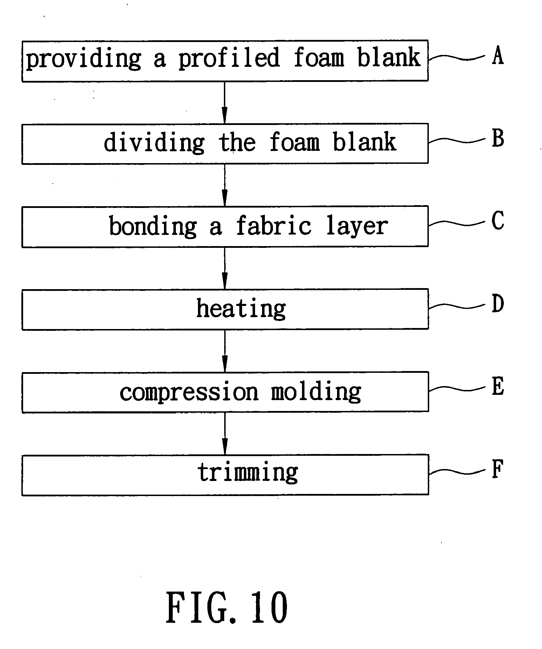

Referring to Figure 10, the preferred embodiment of the method for making foamed sole pads according to this invention includes the steps of:

### A) providing a profiled foam blank:

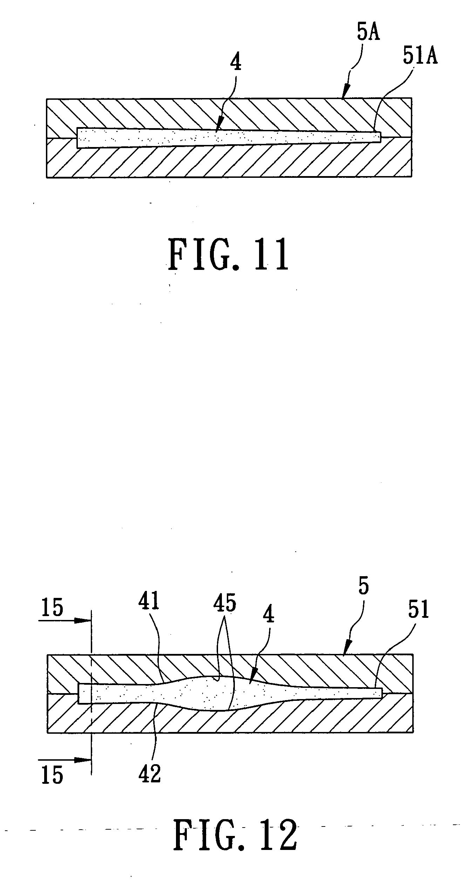

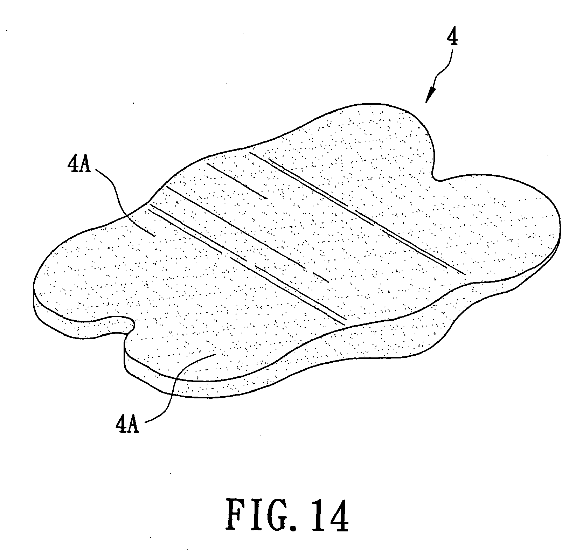

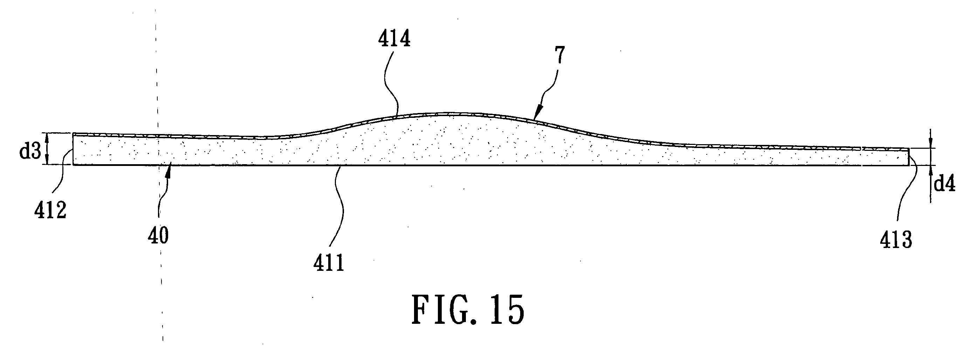

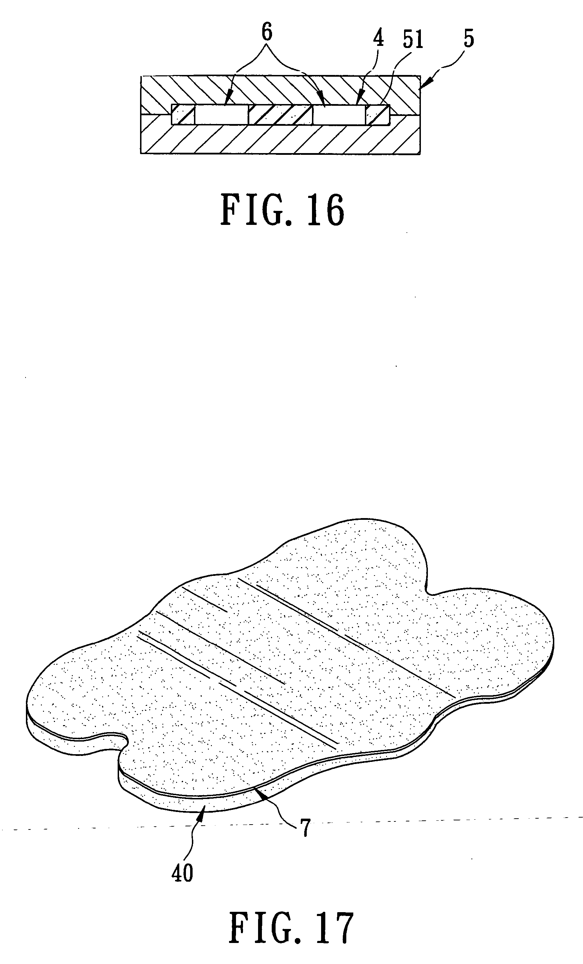

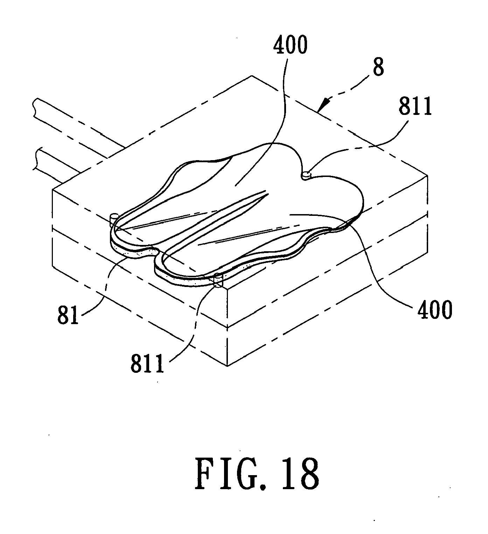

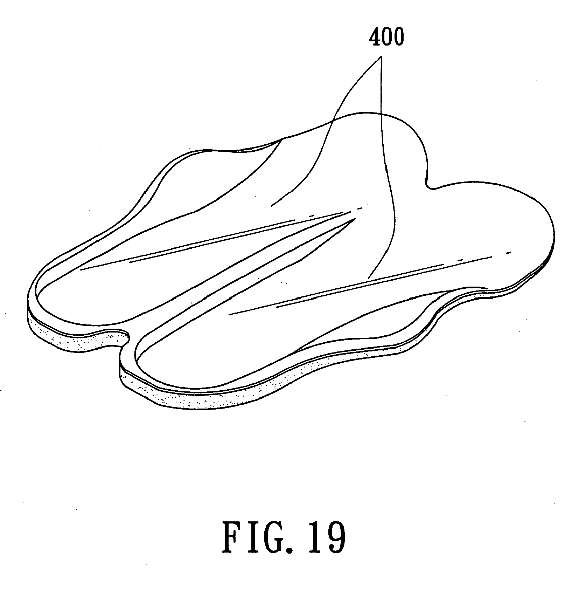

Referring to Figures 11, 12, 13, and 14, a profiled foam blank 4 is provided by molding. The profiled foam blank 4 may include one blank unit 4A or a plurality of blank units 4A. Each blank unit 4A has a substantially sole shaped outline and includes front and heel portions 43, 44, a top profiled surface 41, and a bottom profiled surface 42 symmetrical to the top profiled surface 41. In this embodiment, the profiled foam blank 4 includes two interconnected blank units 4A, and will provide, when divided, two foam blank slices 40 (only one is shown in Figures 15 and 17), each of which is to be formed into two interconnected sole pads 400 (see Figures 18 and 19). If the profiled foamblank 4 includes one blank unit 4A, the profiled foam blank 4, when divided, will provide two foam blank slices (not shown), each of which will be formed into a single sole pad 400.

The front and heel portions 43,44 of each blank unit 4A may have different hardnesses. For example, the front portion 43 is a highly resilient foam blank, and the heel portion 44 is a shock-absorbing foam blank. On the other hand, each blank unit 4A of the profiled foam blank 4 may have a first thickness (d1) of 18 mm, and a second thickness (d2) of 12 mm.

The profiled foam blank 4 may be formed using a mold 5 having a mold cavity 51 defining the profile of the profiled foam blank 4 as shown in Fig. 12, or using a mold 5A having a mold cavity 51A that differs from the mold 5 in that the mold 5A does not have curved inner surface portions 45 of the mold 5. The foam blank slice 40 shown in Figure 17 is obtained from the profiled foam blank 4 formed by the mold 5A.

Referring to Figure 16, if a reinforcing plate 6 is intended to be embedded in the foamed sole pads to be made,' it can be positioned at a proper site in the mold 5 in this step so as to be embedded in the profiled foam blank 4 after molding. The reinforcing plate 6 is usually embedded in at least one of the front and heel portions 43, 44 of the profiled foam blank 4. That is to say, if the reinforcing plate 6 is a shock-absorbing sheet, it is embedded in the heel portion 44 of the profiled foam blank 4. If the reinforcing plate 6 is a highly resilient reinforcing sheet, it is embedded in the front portion 43 of the profiled foam blank 4.

### B) dividing the foam blank:

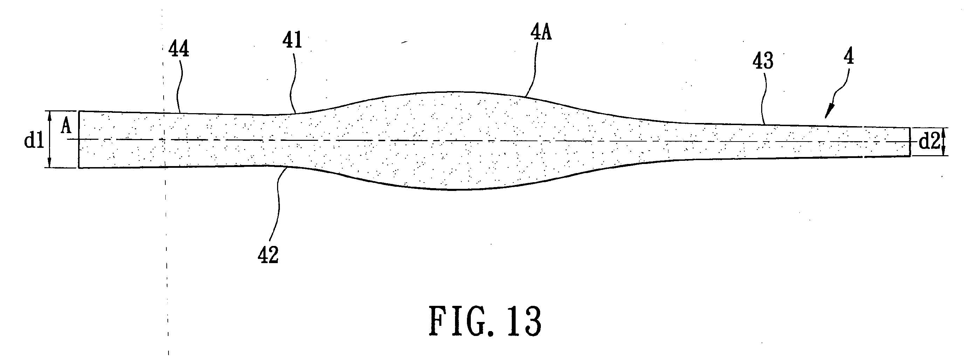

Referring to Figures 13, 15, and 17, the profiled foam blank 4 is divided along a cutting plane (A) between the top and bottom profiled surfaces 41, 42 to provide two foam blank slices 40 (only one is shown in Figures 15 and 17) which are substantially the same in shape and size. Each of the foam blank slices 40 has a cutting surface 411, a profiled surface 414, and a first side surface 412 and a second side surface 413 opposite to each other and extending between the cutting surface 411 and the profiled surface 414. The first side surface 412 has a first height (d3), and the second side surface 413 has a second height (d4). In this preferred embodiment, the first height (d3) is 9 mm, and the second height (d4) is 6 mm.

### C) bonding a fabric layer:

A fabric layer 7 is bonded to a surface of each of the foam blank slices 40 by gluing as shown in Figures 15 and 17. If the fabric layer 7 is intended to be bonded to the profiled surface 414 of each of the foam blank slices 40, the profiled surface 414 should be roughened before bonding. The roughening step can be conducted via ultraviolet irradiation. Alternatively, if the fabric layer 7 is intended to be bonded to the cutting surface 411 of each of the foam blank slices 40, the roughening step is not required.

### D) heating:

Each of the foam blank slices 40 is heated in a baking machine (not shown).

### E) compression molding:

Referring to Figures 18 and 19, each of the foam blank slices 40 is compression molded in a mold cavity 81 of a mold 8 to form foamed sole pads 400. Preferably, the mold 8 has a plurality of positioning pins 811 for positioning each of the foam blank slices 40.

### F) trimming:

The foamed sole pads 400 are trimmed. During and/or after trimming, the foamed sole pads 400 may be separated by cutting.

In view of the aforesaid, the method of this invention has the following advantages:
1) The conventional method includes the steps of cutting, slicing, dividing, molding, and trimming, and thus is relatively complicated and produces a great amount of waste material. Specifically, as shown in Figures 8 and 9, in the conventional method, the sole pads 15 are made by molding the sole blank slice 14 having a square shape. Therefore, a relatively large amount of waste material is produced during the trimming step. In the method of this invention, as shown in Figure 15, the foam blank slice 40 having a predetermined profile is prepared, which is molded to form the foamed sole pads 400 as shown in Figure 19. The waste material trimmed from the sole pads 400 is reduced significantly as compared to that produced by the conventional method. Furthermore, the method of this invention is simplified and time-saving. Therefore, the production cost can be reduced by the method of this invention.
2) In the conventional method, the sole blank slices 14 are formed from the foam blank sheet 10 via trimming the foam blank sheet 10, cutting the foam semi-product 11, bonding the fabric layers 2, dividing the foam products 12, and cutting each of the sole blanks 13. However, in the method of this invention, the profiled foam blank 4 can be provided by molding, and is then processed simply via dividing the foam blank 4 to form the foam blank slices 40 and bonding the fabric layer 7 to the foam blank slices 40. Therefore, the method of this invention is simplified, time-saving, and produces less waste material.
3) In the conventional method, if a thickness of a specific area of the foamed sole pads is intended to be increased, an additional foam blank is required to be glued on the specific area. However, in the method of this invention, any specific shape of the foamed sole pads can be obtained using a mold, for instance, the mold 5 having the mold cavity 51 with a specific profile to prepare the profiled foam blank 4 according to the specific requirement. Therefore, as compared to the conventional method, the method of this invention is relatively efficient and flexible.
4) Furthermore, in the conventional method, if a highly resilient reinforcing sheet or a shock-absorbing sheet is intended to be included in the foamed sole pads, each of the sole blank slices 14 before being bonded with the fabric layer 2 should be formed into a sole blank (not shown), which is then embedded with the reinforcing plate, and subsequently bonded with the fabric layer 2. However, in the method of this invention, as shown in Figure 16, a reinforcing plate 6, such as the highly resilient reinforcing sheet or the shock-absorbing sheet, can be positioned in the mold cavity 51 of the mold 5 when preparing the profiled foam blank 4. Therefore, when compared to the conventional method, the method of this invention is relatively flexible for the specific requirements of the foamed sole pads.

## Claims

1. A method for making foamed sole pads (400), **characterized by** the steps of:
a) providing a profiled foam blank (4) including at least one blank unit (4A) that has a substantially sole shape outline, and that has front and heel portions (43,44), a top profiled surface (41), and a bottom profiled surface (42) symmetrical to the top profiled surface (41);
b) dividing the foam blank (4) along a cutting plane (A) between the top and bottom profiled surfaces (41,42) to provide at least two foam blank slices (40);
c) bonding a fabric layer (7) to a surface of each of the foam blank slices (40);
d) heating each of the foam blank slices (40);
e) compression molding each of the foam blank slices (40) to form the sole pads (400); and
f) trimming the sole pads (400).

2. The method as claimed in Claim 1, further **characterized by** a step of roughening the surface of each of the foam blank slices (40) prior to step c).

3. The method as claimed in Claim 2, **characterized in that** the roughening step is conducted via ultraviolet irradiation.

4. The method as claimed in Claim 1, **characterized in that** a reinforcing plate (6) is embedded in the profiled foam blank (4) in step a).

5. The method as claimed in Claim 4, **characterized in that** the reinforcing plate (6) is embedded in at least one of the front and heel portions (43, 44) of the profiled foam blank (4).

6. The method as claimed in Claim 1, **characterized in that** a mold (8) having a plurality of positioning pins (811) is used to position each of the foam blank slices (40) in step e).

7. The method as claimed in Claim 1, **characterized in that** the front and heel portions (43,44) have different hardnesses.

8. The method as claimed in Clam 1, **characterized in that** the foam blank slices (40) are substantially the same in shape and size.
